(19) Europäisches Patentamt / European Patent Office / Office européen des brevets

(11) **EP 4 359 596 B1**

## (12) FASCICULE DE BREVET EUROPEEN

(45) Date de publication et mention
de la délivrance du brevet:
**06.08.2025 Bulletin 2025/32**

(21) Numéro de dépôt: **22743526.0**

(22) Date de dépôt: **23.06.2022**

(51) Classification Internationale des Brevets (IPC):
**D03D 1/00** *(2006.01)*  **D03D 7/00** *(2006.01)*

(52) Classification Coopérative des Brevets (CPC):
**D03D 7/00; D03D 1/00;** D10B 2401/06;
D10B 2403/022; D10B 2403/0241; D10B 2505/02;
D10B 2505/20

(86) Numéro de dépôt international:
**PCT/FR2022/051232**

(87) Numéro de publication internationale:
**WO 2022/269201 (29.12.2022 Gazette 2022/52)**

---

(54) **PANNEAU CONFORMABLE COMPRENANT DEUX FACES RELIÉES PAR UNE STRUCTURE DE LIAISON NON UNIFORME**

ANPASSBARE PLATTE MIT ZWEI DURCH EINE UNGLEICHFÖRMIGE VERBINDUNGSSTRUKTUR VERBUNDENEN FLÄCHEN

CONFORMABLE PANEL COMPRISING TWO FACES LINKED BY A NON-UNIFORM CONNECTING STRUCTURE

---

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2021 FR 2106784**

(43) Date de publication de la demande:
**01.05.2024 Bulletin 2024/18**

(73) Titulaire: **COMPAGNIE GENERALE DES ETABLISSEMENTS MICHELIN**
**63000 Clermont-Ferrand (FR)**

(72) Inventeurs:
• **LIMOZIN, Bastien**
  **63040 CLERMONT-FERRAND Cedex 9 (FR)**
• **LE CLERC, Christophe**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-B1- 1 059 159      EP-B1- 2 408 957
WO-A1-2019/197319**

---

EP 4 359 596 B1

## Description

### Domaine technique de l'invention

L'invention a pour objet un panneau comprenant deux tissus reliés par une structure porteuse ainsi que l'utilisation de tels panneaux comme matériau de construction.

### Art antérieur

De multiples panneaux sont utilisés dans le domaine de la construction. Parmi ceux-ci on peut citer les panneaux de structure comme des panneaux de béton ou des panneaux de plâtres, ou bien des panneaux isolant tels que par exemple des panneaux polyuréthane, en laine de roche, en fibre de bois.

Ces panneaux peuvent être constitués d'un seul type de matériau, par exemple du plâtre, et sont alors souvent qualifiés de « massifs ». Ils peuvent également être constitués de plusieurs matériaux distincts et assemblés en vue d'améliorer une ou plusieurs qualités spécifiques et sont alors souvent qualifiés de « composites ».

Le document US2017/0044766 décrit ainsi un revêtement de sol composite constitué d'un tissu dit « 3D » comprenant deux faces textiles planes reliées par des éléments d'espacement qui maintiennent à distance et parallèles les deux faces, ce tissu 3D étant sous forme d'un maillage à travers lequel un ciment peut être coulé afin de réaliser un sol renforcé. Cette structure doit être posée sur un support horizontal, le panneau ne pouvant contenir le matériau de remplissage.

Le document WO2019/197319 décrit un matériau composite constitué d'un tissu 3D comprenant deux faces dont l'écartement est régulé par des espaceurs et d'une mousse polyuréthane, ce matériau étant destiné à former une semelle de chaussure, les espaceurs assurant une fonction de tenue mécanique en maintenant l'espace entre les deux faces du tissu, ce qui permet de résister aux écrasements successifs subis par la semelle.

Les documents US2010/0233417 et WO2015/053842 décrivent un composite textile flexible pouvant « prendre » (de la manière dont un ciment « prend »), c'est-à-dire pouvant devenir rigide ou semi-rigide par application d'un liquide ou d'une radiation, ce composite étant constitué d'un tissu 3D comprenant deux faces planes et des espaceurs et contenant une poudre. La poudre est incorporée par l'une des faces du tissu, cette face pouvant se déformer pour créer les espaces nécessaires à l'incorporation de ladite poudre et se rétracter pour la contenir, la ou les faces du tissu étant par ailleurs perméables au liquide ou radiations nécessaires à la prise de la poudre afin de rigidifier le composite. Les faces sont maintenues à distance l'une de l'autre par les espaceurs qui peuvent être individuellement constitués par un groupe de fibre, ou un monofilament. Bien que, selon US2010/0233417 il n'y ait théoriquement aucune limite à l'épaisseur du composite, les contraintes énumérées, et notamment la capacité pour le liquide de pénétrer au cœur du matériau poudreux avant que les parties extérieures n'aient durcies, la capacité des faces à supporter le poids de la poudre ainsi que les contraintes de rigidité sur les espaceurs pour qu'ils puissent correctement remplir leur fonction de maintien de l'espace entre les deux faces internes du composite limitent ces composites à des épaisseurs relativement faibles, typiquement de l'ordre de quelques millimètres comme montré dans les exemples de typiquement, comme montré dans les exemples de WO2015/053842.

Le document WO2015/187826 décrit un composite textile comprenant une étoffe intissée dont une face est perméable au liquide et l'autre face imperméable, l'étoffe étant remplie d'un matériau pouvant se rigidifier au contact du liquide. Les deux faces de l'étoffe sont séparées par un ensemble de fibres auto-portées, c'est-à-dire qui dans leur ensemble maintiennent l'espacement entre les deux faces et résistent aux forces mécaniques d'écrasement. Lorsque ce composite est courbé, avant que le matériau de remplissage ne durcisse, des plis se forment à sa surface. Le document EP2408957B1 divulgue un panneau selon le préambule de la revendication 1.

Quelle que soit la fonction ou la localisation de ces panneaux, on recherche une facilité de mise en œuvre et la préservation de leur intégrité. S'il est facile de réaliser ou de couvrir des surfaces planes, des surfaces complexes telles que des surfaces courbes ou, plus encore, des surfaces non réglées, peuvent être particulièrement délicates à construire ou à couvrir.

Il existe donc un besoin pour des panneaux présentant des formes complexes, simples à mettre en œuvre et pouvant répondre à de multiples besoins.

Pour répondre à ces besoins, la demanderesse a développé un panneau présentant un premier tissu, un deuxième tissu relié au premier tissu par une structure de liaison, le premier tissu étant déformable selon au moins une direction principale du premier tissu. Ce panneau peut être rempli d'un matériau de remplissage dont la nature sera fonction de l'utilisation envisagée pour le panneau.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Par « sensiblement parallèle » ou « s'étendant sensiblement selon », on entend que l'angle formé par les deux directions en question est inférieur à 10°, de préférence inférieur à 5°, de manière préférée inférieur à 2° et de manière très préférée inférieur ou égal à l'erreur de mesure de l'angle par une méthode adaptée.

Deux longueurs sont sensiblement égales si elles sont égales, à la tolérance de mesure usuellement utilisée pour mesurer de telles longueurs près ou à la tolérance du procédé de fabrication utilisant ces éléments sensiblement de même longueur.

Par déformation plastique d'un élément filaire, on entend, comme connu de l'Homme du métier, que lorsque cet élément est étiré selon sa direction générale, sa déformation est irréversible. En d'autres termes, il ne reprend pas sa forme initiale lorsque la sollicitation est arrêtée.

Un tissu est dit déformable si au moins une portion de surface dudit tissu est déformable.

## Panneau de tissu

L'invention concerne un panneau selon la revendication 1.

Par moyenne des longueurs au repos $\overline{h_m}$ des haubans, on entend la moyenne des longueurs au repos des haubans de la structure de liaison, le nombre total de haubans de la structure de liaison du panneau selon l'invention étant égal à m, nombre entier strictement supérieur à 0. Ainsi, $\overline{h_m} = \frac{1}{m}\sum_{i=1}^{m} h_i$. Le nombre total de haubans est ajusté en fonction de la géométrie du panneau, de l'effet de rigidité recherché, ainsi que des caractéristiques de fluidité du matériau de remplissage éventuellement introduit dans le panneau. Les allongements à rupture des éléments filaires sont mesurés selon la norme ASTM D885-03.

La déformation du premier tissu selon au moins une direction principale du premier tissu permet au panneau, après conformation, de suivre ou de définir une surface complexe, non plane, par exemple cylindrique ou en forme de vague, voire non réglée, par exemple hémisphérique. La forme de la surface après conformation est directement déterminée par les hauteurs des haubans $h_i$. On peut ainsi très simplement définir des surfaces complexes en ajustant la hauteur de chaque hauban et leur répartition.

Par conformation, on entend mise en forme du panneau par déformation du tissu. La conformation peut être réalisée par exemple par injection d'un matériau de remplissage entre la face interne du premier tissu et la face interne du deuxième tissu, ou par gonflage à l'aide d'un gaz, par exemple de l'air ou un gaz inerte tel que l'azote, en injectant le gaz sous pression entre les faces internes du premier et du deuxième tissu du panneau. L'homme de l'art s'assurera alors de l'étanchéité des faces à ce gaz sous pression par l'enduction ou le calandrage d'un matériau approprié.

## Matériau de remplissage

De manière préférée, le panneau selon l'invention comprend, entre la face interne du premier tissu et la face interne du deuxième tissu, un matériau de remplissage.

Le matériau de remplissage peut être tout matériau permettant au panneau selon l'invention de remplir la fonction à laquelle il est destiné. Le matériau de remplissage doit être sous une forme permettant son incorporation entre les deux faces internes des tissus constituant le panneau selon l'invention. Le matériau de remplissage peut être sous forme d'un gaz, d'un liquide ou d'un solide divisé au moment de son incorporation entre les faces internes du panneau. Ainsi, le matériau de remplissage peut de manière préférée être toute poudre, gaz, ou liquide, issu de matériaux naturels ou recyclés, éventuellement broyés ou incorporés à l'état fondu dans le panneau selon l'invention.

Le matériau de remplissage peut être un matériau de type ciment, mousse cimentaire ou béton lorsque le panneau est destiné à être utilisé comme élément de structure.

Le matériau de remplissage peut également être un matériau isolant, tel que par exemple une mousse polyuréthane expansée, un matériau solide divisé tel que des granules de polystyrène, de liège, d'argile.

Le matériau de remplissage peut également être choisi parmi des déchets : terre d'excavation, résidus de bâtiments ou de d'infrastructure broyé.

Ainsi, le matériau de remplissage peut être préférentiellement choisi parmi le sable, le ciment, une mousse cimentaire, le plâtre, la terre, l'argile, les fibres naturelles, les fibres minérales, le polystyrène, le polyuréthane, le liège les terres d'excavation, les résidus de bâtiments ou de d'infrastructures broyés.

Le matériau de remplissage peut également être un gaz sous pression, éventuellement un gaz circulant sous pression lorsque le panneau selon l'invention est utilisé en tant que gaine.

Dans un autre arrangement, le matériau de remplissage peut être préférentiellement un matériau expansé, préférentiellement une mousse expansée, de manière préférée une mousse expansée de polyuréthane. Le remplissage du panneau selon l'invention avec un matériau expansif a pour intérêt de permettre la conformation du panneau lors de l'expansion du matériau expansif.

L'injection du matériau de remplissage peut être réalisée de multiples façons. Par exemple, on peut injecter par au moins l'une des extrémités du tissu tridimensionnel le matériau de remplissage au moyen d'une ou plusieurs buses, le matériau s'écoulant progressivement au sein du tissu tridimensionnel soit par gravité, soit en étant « poussée » par le flux de matériau de remplissage.

Il est ainsi possible d'obtenir des panneaux isolants adaptés pour épouser des murs courbes ou de formes complexes.

**Tissus du panneau selon l'invention**

Le premier tissu du panneau selon l'invention comprend des éléments filaires (C1), dits de chaîne, sensiblement parallèles entre eux et s'étendant selon une direction dite de chaine, constituant une première direction principale du premier tissu, des éléments filaires (T1), dits de trame, sensiblement parallèles entre eux et s'étendant selon une direction dite de trame, constituant une deuxième direction principale du premier tissu et différente de la première direction principale du premier tissu.

Le premier tissu est caractérisé en ce qu'il est déformable de manière plastique selon au moins une direction principale du premier tissu de sorte que la distance entre les deux points d'attache de chaque hauban i est sensiblement égale à sa longueur au repos $h_i$. Par déformable, on entend que le tissu peut s'étendre sans rompre selon au moins une direction principale.

En déformant le premier tissu de manière plastique, le panneau selon l'invention peut être conformé et conserver sa forme. Ceci est particulièrement avantageux lorsque le panneau selon l'invention comprend un matériau de remplissage, en particulier lorsque ce matériau de remplissage est un matériau pouvant se rigidifier. La déformation plastique du premier tissu du panneau selon l'invention permet au matériau de remplissage de se rigidifier sans qu'il soit nécessaire de maintenir de tension sur le premier tissu du panneau selon l'invention, ce qui ne serait pas le cas si le premier tissu se déformait de manière élastique.

Le premier tissu est suffisamment déformable pour que la distance entre les deux points d'attache de chaque hauban i est sensiblement égale à sa longueur au repos $h_i$. Ainsi, la forme de la surface obtenue après conformation est réglée par l'emplacement et la hauteur de chaque hauban.

De manière préférée, le deuxième tissu est déformable selon au moins une direction principale du deuxième tissu.

Dans un arrangement préféré, le deuxième tissu se déforme de manière plastique. Dans un autre arrangement préféré, le deuxième tissu se déforme de manière élastique.

Des tissus déformables sont bien connus de l'homme du métier. La déformabilité du tissu peut être obtenue par de multiples moyens. Par exemple, la déformabilité peut être obtenue par l'armure du tissu. Elle peut également être obtenue par la nature des éléments filaires de chaîne et/ou des éléments filaires de trame.

Ainsi, la déformabilité du tissu peut être obtenue en utilisant des éléments filaires bouclés, donc pouvant s'étirer, des éléments filaires élastiques, des éléments filaires pouvant se déformer plastiquement sans rompre ou avec rupture partielle de l'élément filaire. Parmi ces derniers, on peut citer par exemple des éléments filaires guipés, dans lesquelles une âme de l'élément filaire rompt lorsque l'élément filaire est soumis à une traction sans que le reste de l'élément filaire ne rompe.

De manière préférée, au moins un tissu choisi parmi le premier tissu et le deuxième tissu comprend au moins une zone déformable selon au moins une direction principale dudit tissu et au moins une zone non déformable selon au moins une direction principale dudit tissu.

La présence de zones déformables et de zones non déformables permet d'ajuster la forme de la surface du tissu après conformation du panneau selon l'invention. Ainsi le panneau selon l'invention peut, après conformation, par exemple présenter des zones planes et des zones déformées.

Dans un arrangement préféré, au moins un tissu choisi parmi le premier tissu et le deuxième tissu comprend au moins une zone déformable selon la première direction principale dudit tissu, et non déformable selon la deuxième direction principale dudit tissu.

Dans cet arrangement préféré, le tissu peut se déformer selon une première direction principale tout en ne se déformant pas selon la deuxième direction principale, permettant de former des surfaces présentant un profil de type sinusoïdal selon la première direction principale tout en conservant substantiellement la longueur selon la deuxième direction principale.

De manière préférée, au moins un tissu choisi parmi le premier tissu et le deuxième tissu comprend au moins une zone déformable, la zone déformable comprenant au moins un élément filaire ED déformable en traction, dans lequel, pour tout élément filaire ED déformable en traction, il existe un allongement AED < ARED tel que M1ED/M2ED<1, avec M1ED représentant le module de l'élément filaire déformable ED pour tout allongement inférieur ou égal à K1×AED %, M2ED représente le module de l'élément filaire déformable ED pour tout allongement supérieur ou égal à K2×AED %, ARED représentant l'allongement à rupture de l'élément ED en %, avec K1 allant de 0,8 à 0,95, et K2 allant de 1,05 à 1,2, les modules M1ED, M2ED et l'allongement à rupture ARED étant mesurés selon la norme ASTM D885-03.

Un tel élément filaire ED présente un comportement dit « bi-module », connu par ailleurs de l'homme du métier, cet élément présentant une résistance à l'allongement plus forte lorsque l'allongement de l'élément ED est supérieur à AED que lorsque cet allongement est inférieur à AED.

Un tel élément permet d'obtenir un tissu déformable présentant une faible résistance à la déformation lors de la conformation et une forte résistance à la déformation une fois le tissu conformé, permettant d'obtenir des panneaux à la fois faciles à mettre en forme et présentant une bonne stabilité géométrique une fois conformés. Ainsi, même si le panneau présente, une fois conformé, une forme complexe, il est préalablement à sa conformation d'une forme très simple, proche d'un tissu plat, pouvant facilement être stocké et transporté sous forme d'empilements de panneau ou enroulé sur une bobine.

De préférence, chaque élément filaire ED comprend des premier et deuxième organes filaires. De manière préférée, chaque organe filaire présente un module différent et/ou présente une longueur différente pour une longueur donnée d'élément filaire ED afin d'obtenir ce comportement bi-module.

De manière préférée, le deuxième organe filaire est sensiblement rectiligne, le premier organe filaire étant enroulé sensiblement en hélice autour du deuxième organe filaire.

Préférentiellement, pour chaque élément filaire ED, le deuxième organe filaire présente au sein de l'élément filaire ED un allongement avant rupture supérieur à $A_{ED}$ %, et le premier organe filaire présente un allongement avant rupture au sein de l'élément filaire ED inférieur à $A_{ED}$ %.

De manière préférée, le premier et deuxième tissu comprennent, indépendamment l'un de l'autre, un matériau choisi parmi un polyester, un polyamide, une polycétone, un polyuréthane, une fibre naturelle, une fibre minérale, une fibre cellulosique et nu assemblage de ces matériaux, de préférence choisi parmi un polyester, un polyamide, une polycétone, un polyuréthane, une fibre naturelle, une fibre cellulosique et un assemblage de ces matériaux, plus préférentiellement choisi parmi un polyester, une fibre naturelle, une fibre cellulosique et un assemblage de ces matériaux.

Dans un arrangement préféré, au moins un des tissus comprend un matériau ignifuge, par sa nature ou par un traitement d'ignifugation.

De manière préférée, lorsque le panneau selon l'invention comprend un matériau de remplissage, au moins un des premier tissu et deuxième tissu, est agencé de sorte à être étanche au matériau de remplissage. Ainsi, le matériau de remplissage ne peut fluer à travers le tissu agencé de manière à être étanche audit matériau. De manière préférée, les deux tissus du panneau selon l'invention sont agencés de manière à être étanches au matériau de remplissage.

## Zones déformables et non déformables du tissu

Dans un mode de réalisation préféré permettant d'assurer efficacement la conformation du premier tissu du panneau selon l'invention, le premier tissu comprend :

- un premier groupe de zones comprenant au moins une zone droite transversale (Z1), chaque zone droite transversale (Z1) du premier groupe de zones étant agencée de façon à permettre un allongement d'au moins une zone droite transversale (Z1) du premier groupe de zones selon la première direction principale du premier tissu (G1), de préférence un allongement de chaque zone droite transversale (Z1) du premier groupe de zones selon la première direction principale du premier tissu (G1),
- un deuxième groupe de zones comprenant au moins une zone droite transversale (Z2), chaque zone droite transversale (Z2) du deuxième groupe de zones étant agencée de façon à empêcher un allongement de ladite zone droite transversale (Z2).

Par définition, une zone droite transversale du tissu est délimitée longitudinalement par deux droites imaginaires sensiblement perpendiculaires à la première direction principale du premier tissu. Une zone droite transversale s'étend sur toute la largeur du tissu, c'est-à-dire que la zone droite transversale est délimitée transversalement par les bords longitudinaux du tissu.

De préférence, dans l'arrangement où chaque élément filaire ED comprend des premier et deuxième organes filaires, chaque zone droite transversale du premier groupe de zones est agencée de façon à permettre un allongement de chaque élément filaire de chaine selon la première direction principale dans chaque zone droite transversale du premier groupe de zones.

L'allongement de chaque élément filaire ED de chaine peut être obtenu par tout moyen, par exemple par des premiers éléments filaires tels que décrits dans les demandes WO2018/130782 et WO2018/130783.

Dans un mode de réalisation permettant d'obtenir des zones droites transversales (Z2) du deuxième groupe de zones indéformables, chaque zone droite transversale (Z2) du deuxième groupe de zones est agencée de façon à empêcher un allongement de chaque élément filaire de chaine selon la première direction générale dans chaque zone droite transversale (Z2) du deuxième groupe de zones.

Dans les modes de réalisation préférés décrits ci-dessus, chaque zone droite transversale (Z1) du premier groupe de zones est une zone dite déformable. De telles zones sont déformables dans les conditions de conformation et participent à la conformabilité du premier tissu. Chaque zone droite transversale (Z2) du deuxième groupe de zones est une zone dite non rompable. Optionnellement, dans un mode de réalisation, chaque zone droite transversale (Z2) du deuxième groupe de zones est indéformable. Dans un autre mode de réalisation, chaque zone droite transversale (Z2) du deuxième groupe de zones est déformable mais dans une bien moindre mesure que chaque zone droite transversale (Z1) du premier groupe de zones. De telles zones sont non rompables dans les conditions de conformation et ne participent pas ou peu à la conformabilité du premier tissu. Ainsi, chaque zone droite transversale (Z1) dite déformable du premier groupe de zones se déforme suffisamment pour permettre la conformation de l'assemblage et compense le non-allongement ou le faible allongement des zones droites transversales (Z2) non rompables du deuxième groupe de zones. L'allongement à force maximale de l'ensemble des zones droites transversales du premier groupe de zones sera d'autant plus grand que les zones droites transversales dites déformables du premier groupe de zones sont courtes et peu nombreuses par rapport aux zones droites transversales non rompables du deuxième groupe de zones. À l'échelle des éléments filaires de chaine, les portions de chaque premier élément filaire de chaine situées dans chaque zone droite transversale (Z1) dite déformable du premier groupe de zones se déforment suffisamment pour permettre la conformation de l'assemblage et compensent le non-allongement ou le faible allongement des portions de chaque premier élément filaire de chaine situées dans les zones droites transversales (Z2) non rompables du deuxième groupe de zones.

Aussi, chaque zone dite déformable du premier groupe de zones est déformable sous une contrainte relativement faible ce qui permet, lors du procédé de conformation du panneau selon l'invention, d'utiliser une contrainte de conformation adaptée, correspondant par exemple à l'insertion du matériau de remplissage entre les deux faces internes du premier et du deuxième tissu du panneau selon l'invention.

Dans un mode de réalisation préféré, chaque élément filaire porteur comprend une première portion filaire d'ancrage de chaque élément filaire porteur dans le premier tissu prolongeant la portion filaire porteuse dans le premier tissu :

- chaque zone droite transversale (Z1) du premier groupe de zones étant dépourvue de toute première portion filaire d'ancrage,
- chaque zone droite transversale (Z2) du deuxième groupe de zones comprenant au moins une première portion filaire d'ancrage.

De façon préférée, chaque zone droite transversale (Z1) du premier groupe de zones alterne, selon la première direction principale du premier tissu, avec une zone droite transversale (Z2) du deuxième groupe de zones.

Ainsi, à l'échelle du premier tissu, on obtient une déformation homogène de l'ensemble du premier tissu, cette déformation étant d'autant plus homogène que la longueur au repos de chaque zone droite transversale selon la première direction principale du premier tissu est petite. Par longueur au repos d'une zone droite transversale selon la première direction générale, on entend la longueur de la zone selon la direction longitudinale en l'absence de toute contrainte extérieure exercée sur la zone (autre que la pression atmosphérique). Une zone droite transversale au repos selon la première direction générale n'est ni en extension ni en compression selon cette direction et présente donc un allongement nul selon cette direction.

Les éléments présentés ci-dessus relatifs aux zones droites transversales (Z1) et (Z2) s'appliquent *mutatis mudandis* de manière préférée au deuxième tissu du panneau selon l'invention.

## Structure de liaison

Le panneau selon l'invention comprend une structure de liaison comprenant des éléments filaires reliant le premier tissu au deuxième tissu, chaque élément filaire comprenant au moins une portion filaire, dite hauban, s'étendant entre le premier et le deuxième tissu et reliant le premier tissu au deuxième tissu, chaque hauban i ayant une longueur au repos $h_i$ et s'étendant d'un point d'attache au premier tissu vers un point d'attache au deuxième tissu, au moins une partie des haubans de la structure de liaison présentant une longueur au repos différente de la longueur au repos moyenne $\overline{h_m}$ des haubans, l'écart E, exprimé en %, entre la longueur au repos du hauban le plus long $h_{max}$ et la longueur au repos du hauban le plus petit $h_{min}$ et calculé selon $E = 100 \times (h_{max}-h_{min})/h_{min}$ étant tel que $E > A_r$, où $A_r$ représente, en %, l'allongement à rupture du hauban dont la longueur au repos est la plus faible.

Par longueur au repos du hauban, on entend la longueur du hauban selon la direction longitudinale en l'absence de toute contrainte extérieure exercée sur le hauban (autre que la pression atmosphérique). Un hauban au repos selon sa direction longitudinale n'est ni en extension ni en compression selon cette direction et présente donc un allongement nul selon cette direction. De même et de manière générale, par longueur au repos d'un élément filaire, on entend la longueur de l'élément filaire selon sa direction longitudinale en l'absence de toute contrainte extérieure exercée sur l'élément filaire (autre que la pression atmosphérique).

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsque sa section transversale est de forme circulaire, le diamètre de cette section est de préférence inférieur à 5 mm, plus préférentiellement compris dans un domaine allant de 10 $\mu$m à 1,2 mm.

Chaque élément filaire de la structure de liaison, notamment chaque hauban qui relie les faces internes des premier et deuxième tissus l'un à l'autre, peut être caractérisée géométriquement par sa longueur au repos LP et par sa section moyenne SP, qui est la moyenne des sections obtenues par la coupe du hauban par toutes les surfaces parallèles aux premier et deuxième tissu et comprises entre les premier et deuxième tissus. Dans le cas le plus fréquent d'une section constante de l'élément filaire et du hauban, la section moyenne SP est égale à cette section constante.

Chaque élément filaire de la structure de liaison, notamment chaque hauban, présente typiquement une plus petite dimension caractéristique E de sa section moyenne SP, préférentiellement au plus égale à 0.02 fois la longueur au repos moyenne $\overline{h_m}$ des haubans et un rapport de forme R de sa section moyenne SP préférentiellement au plus égal à 3. Une plus petite dimension caractéristique E de la section moyenne SP de l'élément porteur au plus égale à 0.02 fois la longueur au repos moyenne $\overline{h_m}$ des haubans exclut tout élément porteur massif, ayant un volume important.

Un rapport de forme R de sa section moyenne SP au plus égal à 3 signifie que la plus grande dimension caractéristique V de sa section moyenne SP est au plus égale à 3 fois la plus petite dimension caractéristique E de sa section moyenne SP. À titre d'exemples, une section moyenne SP circulaire, ayant un diamètre égal à d, a un rapport de forme R=1, une section moyenne SP rectangulaire, ayant une longueur V et une largeur V', a un rapport de forme R=V/V', et une section moyenne SP elliptique, ayant un grand axe B et un petit axe B', a un rapport de forme R=B/B'.

La longueur au repos moyenne $\overline{h_m}$ des haubans est préférentiellement supérieure à 8 mm, de manière préférée comprise entre 10 et 2000 mm, préférentiellement comprise entre 10 et 1000 mm, préférentiellement comprise entre 10 et 500 mm, très préférentiellement comprise entre 30 et 100 mm, de manière très préférée comprise entre 40 et 70 mm. Cette longueur au repos moyenne peut être ajustée en fonction de la destination d'usage du panneau selon l'invention.

Un hauban a un comportement mécanique de type filaire, c'est-à-dire qu'il ne peut être soumis qu'à des efforts d'extension ou de compression selon sa ligne moyenne. Chaque hauban de la structure de liaison est flexible. C'est-à-dire qu'il peut plier sans rompre ni se déformer plastiquement. La structure de liaison est telle qu'elle ne peut supporter à elle seule l'espacement entre les deux faces du panneau selon l'invention. Sans remplissage, ni pression interne, les deux faces peuvent se rapprocher l'une de l'autre sans effort.

De manière préférée, les hauteurs $h_i$ des haubans sont distribuées de manière croissante selon au moins une des première et deuxième directions principales du premier tissu. Ce type de distribution des hauteurs de haubans vise à donner au panneau la forme globale d'un prisme, d'un cône ou d'une pyramide.

De manière préférée, les hauteurs $h_i$ des haubans sont distribuées de manière périodique selon au moins une des première et deuxième directions principales du premier tissu. Ce type de distribution des hauteurs de haubans vise à donner à l'un des tissu du panneau une surface présentant un motif périodique, par exemple un motif de vague si la distribution des tailles est de forme sinusoïdale, ou un motif de créneaux si la distribution des tailles est de type créneau.

De manière préférée, le panneau selon l'invention comprend au moins g groupes $G_j$ de haubans, avec g supérieur à 1 et inférieur à m, et j entier compris entre 1 et g, chaque groupe $G_j$ étant caractérisé en ce que chaque hauban dudit groupe $G_j$ présente une longueur au repos sensiblement égale à la moyenne des longueurs au repos $\overline{h_J}$ des haubans dudit groupe $G_j$ et, pour j et k entiers différents compris entre 1 et g, $\overline{h_J} \neq \overline{h_k}$.

Dans un mode de réalisation préféré, chaque élément filaire de la structure de liaison est textile. Par textile, on entend que chaque élément filaire de la structure de liaison est non métallique, par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire de la structure de liaison est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice tel qu'un retors ou un surtors. Dans encore un autre mode de réalisation, chaque élément filaire est constitué d'un monofilament. Chaque fibre mono-filamentaire ou multi-filamentaire présente un diamètre pouvant aller de quelques centièmes de millimètres à quelques millimètres, typiquement compris entre 0,001 et 5 mm, préférentiellement compris entre 5 et 50 $\mu$m, préférentiellement compris entre 10 et 40 $\mu$m.

Dans un arrangement préféré, chaque élément filaire de la structure de liaison est une fibre textile multi-filamentaire, chaque fibrille constituant la fibre textile présentant un diamètre compris entre 0,001 et 0,5 mm, préférentiellement compris entre 5 et 50 $\mu$m, préférentiellement compris entre 10 et 40 $\mu$m. De tels éléments filaires ont pour avantage d'être plus flexibles que des éléments filaires monofilamentaires. Le tissu selon l'invention comprenant de tels éléments filaires peut ainsi être stocké de manière très compacte en rapprochant les faces internes du premier tissu et du deuxième tissu l'une de l'autre. De manière préférée dans cet arrangement, les éléments filaires sont agencés de telle sorte que les haubans ne puissent maintenir, à eux seuls, l'espacement entre les faces internes des deux tissus lorsque le panneau est soumis à un effort de compression, c'est-à-dire à une force exercée sur le panneau perpendiculairement à sa surface et dans sa direction. Cet agencement est obtenu en ajustant la densité de haubans, exprimée en nombre de haubans par mètre carré, et/ou en ajustant la souplesse des haubans par l'intermédiaire du titre ou de la nature chimique des éléments filaires. Toutefois, les haubans devront présenter une résistance suffisante pour maintenir l'espacement entre les deux faces internes des tissus une fois le matériau de remplissage introduit entre les deux faces internes du panneau selon l'invention en résistant à la pression induite par l'introduction du matériau de remplissage, c'est-à-dire en présentant une résistance à l'extension suffisante. Cette résistance peut être ajustée par la densité des haubans et/ou leur ténacité et/ou leur nature chimique.

Dans un autre mode de réalisation, chaque élément filaire de la structure de liaison est métallique, par exemple un monofilament métallique ou un assemblage de monofilaments métalliques, chaque monofilament métallique présentant un diamètre pouvant aller de quelques centièmes de millimètres à quelques millimètres, typiquement compris entre 0,01 et 5 mm. Dans un mode de réalisation, chaque élément filaire de la structure de liaison est constitué d'un assemblage de plusieurs monofilaments métalliques. Dans un autre mode de réalisation, chaque élément filaire est constitué d'un monofilament métallique.

Dans un mode de réalisation, chaque élément filaire de la structure de liaison s'étend alternativement du premier tissu vers le deuxième tissu et du deuxième tissu vers le premier tissu lorsqu'on se déplace le long de l'élément filaire.

Dans un mode de réalisation, chaque élément filaire de la structure de liaison comprend une première portion filaire d'ancrage de chaque élément filaire de la structure de liaison dans le premier tissu prolongeant le hauban dans le premier tissu.

Préférentiellement, chaque première portion filaire d'ancrage est entrelacée avec le premier tissu. Un tel assemblage présente l'avantage de pouvoir être fabriqué en une seule étape. Toutefois, il est également possible d'envisager de fabriquer le panneau selon l'invention en deux étapes, une première étape de fabrication du premier tissu et une deuxième étape d'entrelacement du ou des éléments filaires de la structure de liaison avec le premier tissu. Dans les deux cas, l'entrelacement de chaque élément filaire de la structure de liaison avec le premier tissu permet d'assurer l'ancrage mécanique de chaque élément filaire de la structure de liaison dans le premier tissu et ainsi de conférer les propriétés mécaniques souhaitées à la structure de liaison.

Dans un mode de réalisation, afin d'assurer l'ancrage mécanique de la portion filaire d'ancrage, chaque première portion filaire d'ancrage est enroulée au moins en partie autour d'au moins un élément filaire du premier tissu.

De manière préférée, le premier tissu comprend :

- des éléments filaires, dits de chaine, sensiblement parallèles entre eux et s'étendant selon une direction, dite de chaine, sensiblement parallèle à la première direction principale du premier tissu, et
- des éléments filaires, dits de trame, sensiblement parallèles entre eux et s'étendant selon une direction, dite de trame, et s'entrecroisant avec les éléments filaires de chaine, chaque première portion filaire d'ancrage étant enroulée au moins en partie autour d'au moins un élément filaire de trame du premier tissu, de préférence autour d'au moins deux éléments filaire de trame adjacents selon la première direction principale du premier tissu.

Dans un mode de réalisation, chaque première portion filaire d'ancrage s'étend selon une direction sensiblement parallèle à la première direction principale du premier tissu.

De préférence, chaque première portion filaire d'ancrage passe alternativement d'une face du premier tissu à l'autre face du premier tissu entre deux éléments filaires de trame adjacents autour desquels la première portion filaire d'ancrage s'enroule.

**Fabrication du panneau**

Dans une étape de formation du panneau selon l'invention, on assemble les premiers éléments filaires 64, 66 de façon à former le premier tissu 26 et les deuxièmes éléments filaires 68, 70 de façon à former le deuxième tissu 28. On assemble également les éléments porteurs, éventuellement revêtus d'une composition adhésive, préférentiellement réticulée, 32 avec les premier et deuxième tissus 26, 28. Dans le mode de réalisation décrit en exemple, on assemble en une seule étape, et donc simultanément, les premiers et deuxièmes éléments filaires 64, 66, 68, 70 avec les éléments porteurs 32 de façon à former le panneau 24. Dans un autre mode de réalisation, on forme tout d'abord séparément chaque premier et deuxième tissu 26, 28, puis on relie entre eux les premier et deuxième tissus 26, 28 avec les éléments porteurs éventuellement revêtus d'une composition adhésive, préférentiellement réticulée, 32. L'étape de formation du panneau 24 selon l'invention est mise en œuvre d'une façon connue par l'homme du métier des tissus tramés.

**Assemblage**

L'invention concerne également un assemblage comprenant au moins un panneau selon l'invention. Un assemblage est un ensemble pouvant regrouper tout élément dont au moins un panneau selon l'invention. Un tel assemblage peut être par exemple et sans être limitatif un bâtiment tel qu'un entrepôt, un immeuble, une maison, un aéronef, un bateau ou un véhicule terrestre. Cet assemblage peut également être une gaine, un conduit ou un contenant.

**Description des figures**

[Fig 1] Vue générale schématique d'un panneau selon l'invention comprenant un premier tissu comprenant une zone déformable.
[Fig 2] Vue générale schématique d'un panneau selon l'invention comprenant un premier tissu comprenant une zone déformable et un deuxième tissu comprend une zone déformable.
[Fig 3] Vue générale schématique d'un panneau selon l'invention comprenant deux tissus déformables.
[Fig 4] Vue du dessus du panneau selon l'invention.
[Fig 5] Vue en coupe du panneau selon l'invention selon le plan de coupe P-P'.

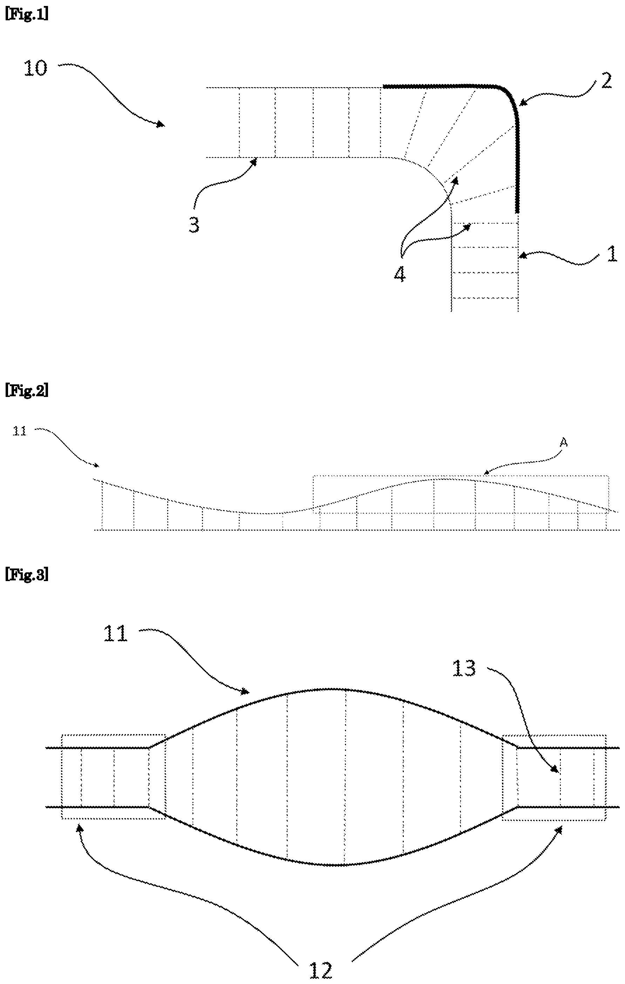

On représente sur la figure 1 une vue générale schématique d'une coupe transversale d'un panneau (10) selon l'invention comprenant un premier tissu (1) comprenant une zone déformable (2), un deuxième tissu (3) et une structure de liaison comprenant des éléments filaires reliant le premier tissu au deuxième tissu, chaque élément filaire comprenant au moins une portion filaire, dite hauban (4), reliant le premier tissu (1) au deuxième tissu (3), une partie des haubans de la structure de liaison présente une longueur au repos différente de la longueur au repos moyenne $\overline{h_m}$ des haubans. La zone déformable (2) est représentée avec une épaisseur plus importante uniquement pour des besoins de lisibilité du schéma. Sur la figure 1 n'est pas représenté le matériau de remplissage préférentiellement présent entre la face interne du premier tissu (1) et la face interne du deuxième tissu (2). On voit qu'il est possible de suivre une surface courbe sans devoir utiliser une multitude de panneaux plats pour approximer la courbure de la surface, ce qui facilite grandement la mise en œuvre, avec une surface intérieur de forme différente de la surface extérieure du panneau.

On représente sur la figure 2 une vue générale schématique d'une coupe d'un panneau (11) comprenant une zone (A) déformable du premier tissu. Ce schéma illustre la manière dont des formes complexes peuvent être obtenues avec le panneau selon l'invention, la forme de la surface du premier tissu étant, après conformation, déterminée par la répartition de taille des haubans.

On représente sur la figure 3 une autre vue générale schématique d'un panneau (11) comprenant une zone déformable du premier tissu et une zone déformable du deuxième tissu, et deux groupes de haubans (12), la longueur de chaque hauban (13) étant substantiellement égale à la moyenne des longueurs de chaque hauban du groupe.

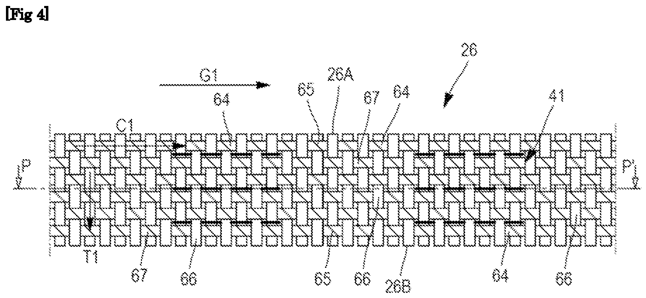

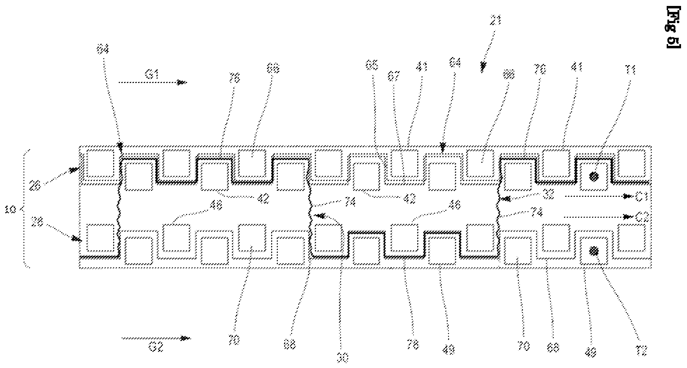

On représente sur la figure 4 une vue du dessus d'un panneau (10) selon l'invention et sur la figure 5 une vue schématique d'une coupe transversale d'un panneau (10). Sur ces deux figures, les mêmes éléments sont numérotés de la même façon.

Le premier tissu 26 comprend deux bords longitudinaux 26A et 26B. Le premier tissu 26 s'étend selon une première direction principale du premier tissu G1 sensiblement parallèle à chaque bord longitudinal 26A, 26B. Le premier tissu 26 comprend des éléments filaires 64, appelés éléments filaires de chaine, et des éléments filaires 66, appelés éléments filaires de trame. Les éléments filaires de chaine 64 du premier tissu 26 sont sensiblement parallèles entre eux et s'étendent selon une direction dite de chaine C1, sensiblement parallèle à la première direction principale G1. Les éléments filaires de trame 66 du premier tissu 26 sont sensiblement parallèles entre eux et s'étendent selon une direction dite de trame T1 et s'entrecroisent avec les éléments filaires de chaine 64. Les éléments filaires de chaine 64 s'étendent continûment sur toute la longueur du premier tissu 26.

Chaque élément filaire 64, 66, est ici, par exemple, un élément filaire textile.

Les éléments filaires 64 sont tous sensiblement identiques. Chaque élément filaire 64 de chaine comprend des premier et deuxième organes filaires 65, 67. Le deuxième organe filaire 67 est sensiblement rectiligne et le premier organe filaire 65 est enroulé sensiblement en hélice autour du deuxième organe filaire 67. Ici le premier organe filaire 65 est un brin multifilamentaire en PET présentant un titre égal à 110 tex et le deuxième organe filaire 67 est un brin mutifilamentaire en rayonne de 23 tex.

Les éléments filaires 66 comprennent ici deux organes filaires, le deuxième organe filaire étant sensiblement rectiligne et le premier organe filaire étant enroulé sensiblement en hélice autour du deuxième organe filaire. Ici le premier organe filaire est un brin multifilamentaire en PET présentant un titre égal à 110 tex et le deuxième organe filaire est un brin mutifilamentaire en rayonne de 23 tex.

Le deuxième tissu 28, représenté sur la figure 4, s'étend selon une première direction principale du deuxième tissu G2. Le deuxième tissu 28 comprend des éléments filaires 68, appelés éléments filaires de chaine, et des éléments filaires 70, appelés éléments filaires de trame. Les éléments filaires de chaine 68 du deuxième tissu 28 sont sensiblement parallèles entre eux et s'étendent selon une direction dite de chaine C2, sensiblement parallèle à la première direction principale du deuxième tissu G2. Les éléments filaires de trame 70 du deuxième tissu 28 sont sensiblement parallèles entre eux et s'étendent selon une direction dite de trame T2 et s'entrecroisent avec les éléments filaires de chaine 68. Les éléments filaires de chaine 68 s'étendent continûment sur toute la longueur du deuxième tissu 28.

Chaque élément filaire 68, 70, est ici, par exemple, un élément filaire textile.

Les éléments filaires 68 sont tous sensiblement identiques et sont ici un brin multifilamentaire en PET présentant un titre égal à 110 tex.

Les éléments filaires 70 sont tous sensiblement identiques et sont ici un brin multifilamentaire en PET présentant un titre égal à 167 tex.

Le panneau (10) comprend une structure de liaison comprenant des éléments filaires reliant le premier tissu (26) au deuxième tissu (28), chaque élément filaire comprenant au moins une portion filaire (74), dite hauban, s'étendant entre le premier et le deuxième tissu et reliant le premier tissu au deuxième tissu. Chaque élément filaire 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est ici un élément filaire porteur textile, réalisé en PET et de titre 55 tex.

Chaque élément filaire 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portion filaire d'ancrage 76, 78 entre elles.

En l'espèce, chaque première portion filaire d'ancrage 76 est enroulée au moins en partie autour d'au moins un élément filaire de trame 66 du premier tissu 26 et ici, de préférence, autour d'au moins deux éléments filaire de trame 66 adjacents selon la première direction principale du premier tissu G1. De façon analogue, chaque deuxième portion filaire d'ancrage 78 est enroulée au moins en partie autour d'au moins un élément filaire de trame 68 du deuxième tissu 28, de préférence autour d'au moins deux éléments filaire de trame 66 adjacents selon la première direction principale du deuxième tissu G2.

Chaque première et deuxième portion filaire d'ancrage 76, 78 s'étend selon une direction sensiblement parallèle à respectivement la première direction principale du premier et du deuxième tissu G1, G2.

Chaque première portion filaire d'ancrage 76 passe alternativement de la face 41 à la face 42 entre deux éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux éléments filaires de trame 68 adjacents autour desquels la deuxième portion filaire d'ancrage 78 s'enroule.

Le premier tissu 26 représenté figures 4 et 5 comprend des zones droites transversales Z1 d'un premier groupe de zones, chaque zone droite transversale Z1 présentant une longueur au repos Ld1 selon la première direction principale du premier tissu G1 et s'étendant sur toute la largeur du premier tissu 26. Toutes les zones droites transversales Z1 du premier groupe de zones droites transversales peuvent être identiques ou différentes suivant la forme recherchée pour le panneau conformé.

Le premier tissu 26 représenté figures 4 et 5 comprend également des zones droites transversales Z2 d'un deuxième groupe de zones, chaque zone droite transversale Z2 présentant une longueur au repos Ld2 selon la première direction principale du premier tissu G1 et s'étendant sur toute la largeur du premier tissu 26. Toutes les zones droites transversales Z2 du deuxième groupe de zones droites transversales peuvent être identiques ou différentes suivant la forme recherchée pour le panneau conformé.

Chaque zone droite transversale Z1 du premier groupe de zones alterne, selon la première direction principale du premier tissu avec une zone droite transversale Z2 du deuxième groupe de zones.

**Exemples**

On fabrique deux panneaux. Un premier panneau correspond à celui représenté figures 4 et 5. Le deuxième panneau présente un premier et deuxième tissu identiques au premier panneau, mais ne comprend pas de structure de liaison. Les caractéristiques des premier, deuxième tissus et structure de liaison lorsqu'elle est présente sont indiquées dans le tableau 1 ci-dessous.

[Tableau 1]

|  |  | Matériau | Titre | Densité de fil |
|---|---|---|---|---|
| Premier tissu | Éléments filaires de chaine | PET | 110 | 104 = 4 /dm |
|  | Éléments filaires de trame | PET | 167 | 81 $\pm$ 4 /dm |
| Deuxième tissu | Éléments filaires de chaine | PET | 110 | 104 $\pm$ 4 /dm |
|  | Éléments filaires de trame | PET | 167 | 81 $\pm$ 7 /dm |
| Structure de liaison | Éléments filaires | PET | 55 | Env. 70 000 /m$^2$ |

Les deux panneaux présentent les caractéristiques géométriques suivantes :

- épaisseur : 40 mm
- largeur : 150 mm
- longueur : 500 mm

Ils sont ensuite remplis de mousse polyuréthane. On réalise sur chacun de ces panneaux une mesure dite « 3 points » réalisée selon la norme NF EN 12089. Les résultats sont présentés au Tableau 2.

[Tableau 2]

|  | Premier panneau | Deuxième panneau |
|---|---|---|
| $E_{mod}$ (kPa) | 8788 | 5450 |
| $F_{max}$ (N) | 326 | 135 |
| $\sigma_M$ à $F_{max}$ (kPa) | 427 | 177 |

Les panneaux selon l'invention, outre leur capacité à se conformer selon une forme de surface complexe, présentent en outre une excellente résistance structurelle.

**Revendications**

1. Panneau comprenant :

   • un premier tissu comprenant des éléments filaires (C1), dits de chaîne, sensiblement parallèles entre eux et s'étendant selon une direction dite de chaine, constituant une première direction principale du premier tissu, des éléments filaires (T1), dits de trame, sensiblement parallèles entre eux et s'étendant selon une direction dite de trame, constituant une deuxième direction principale du premier tissu différente de la première direction principale du premier tissu :
   • un deuxième tissu comprenant des éléments filaires (C2), dits de chaîne, sensiblement parallèles entre eux et s'étendant selon une direction dite de chaine, constituant une première direction principale du deuxième tissu, des deuxièmes éléments filaires (T2), dits de trame, sensiblement parallèles entre eux et s'étendant selon une direction dite de trame, constituant une deuxième direction principale du deuxième tissu différente de la première direction principale du deuxième tissu ;
   • une structure de liaison comprenant n éléments filaires reliant le premier tissu au deuxième tissu, chaque élément filaire comprenant au moins une portion filaire, dite hauban, s'étendant entre le premier et le deuxième tissu et reliant le premier tissu au deuxième tissu, chaque hauban i ayant une longueur au repos $h_i$ et s'étendant d'un point d'attache au premier tissu vers un point d'attache au deuxième tissu ;

au moins une partie des m haubans de la structure de liaison présente une longueur au repos différente de la moyenne des longueurs au repos $\overline{h_m}$ des haubans, m représentant le nombre total de haubans de la structure de liaison, **caractérisé en ce que** l'écart E, exprimé en %, entre la longueur au repos du hauban le plus long de la structure de liaison $h_{max}$ et la longueur au repos du hauban de la structure de liaison le plus petit $h_{min}$ et calculé selon E=100 x $(h_{max}-h_{min})/h_{min}$ est tel que $E > A_r$, où $A_r$ représente, en %, l'allongement à rupture du hauban dont la longueur au repos est la plus faible, et **en ce que** le premier tissu est déformable de manière plastique selon au moins une des première et deuxième directions principales du premier tissu de sorte que la distance entre les deux points d'attache de chaque hauban i est sensiblement égale à sa longueur au repos $h_i$.

2. Panneau selon la revendication précédente dans lequel les hauteurs $h_i$ des haubans sont distribuées de manière périodique selon au moins une des première et deuxième directions principales du premier tissu.

3. Panneau selon l'une quelconque des revendications précédentes comprenant au moins g groupes $G_j$ de haubans, avec g supérieur à 1 et inférieur à m, et j entier compris entre 1 et g, chaque groupe $G_j$ étant **caractérisé en ce que** chaque hauban dudit groupe $G_j$ présente une longueur au repos sensiblement égale à la moyenne des longueurs au repos $\overline{h_J}$ des haubans dudit groupe $G_j$ et, pour j et k entiers différents compris entre 1 et g, $\overline{h_J} \neq \overline{h_k}$.

4. Panneau selon l'une quelconque des revendications précédentes comprenant, entre la face interne du premier tissu et la face interne du deuxième tissu, un matériau de remplissage.

5. Panneau selon la revendication précédente dans lequel le matériau de remplissage est choisi parmi le sable, le ciment, une mousse cimentaire, le plâtre, la terre, l'argile, les fibres naturelles, les fibres minérales, le polystyrène, le polyuréthane, le liège les terres d'excavation, les résidus de bâtiments ou de d'infrastructures broyés.

6. Panneau selon la revendication 4 dans lequel le matériau de remplissage est un matériau expansé, préférentiellement une mousse expansée, de manière préférée une mousse expansée de polyuréthane.

7. Panneau selon l'une quelconque des revendications précédentes dans lequel le deuxième tissu est déformable selon au moins une des première et deuxième directions principales du deuxième tissu.

8. Panneau selon la revendication précédente dans lequel le deuxième tissu se déforme de manière plastique.

9. Panneau selon l'une quelconque des revendications précédentes dans lequel au moins un tissu choisi parmi le premier tissu et le deuxième tissu comprend au moins une zone déformable, la zone déformable comprenant au moins un élément filaire ED déformable en traction, dans lequel, pour tout élément filaire ED déformable en traction, il existe un allongement $A_{ED} < AR_{ED}$ tel que $M1_{ED}/M2_{ED}<1$, avec $M1_{ED}$ représentant le module de l'élément filaire déformable ED pour tout allongement inférieur ou égal à $K1 \times A_{ED}$ %, $M2_{ED}$ représente le module de l'élément filaire déformable ED pour tout allongement supérieur ou égal à $K2 \times A_{ED}$ %, $AR_{ED}$ représentant l'allongement à rupture de l'élément ED en %, avec K1 allant de 0,8 à 0,95, et K2 allant de 1,05 à 1,2, les modules $M1_{ED}$, $M2_{ED}$ et l'allongement à rupture $AR_{ED}$ étant mesurés selon la norme ASTM D885-03.

10. Panneau selon l'une quelconque des revendications précédentes dans lequel le premier et deuxième tissu comprennent, indépendamment l'un de l'autre, un matériau choisi parmi un polyester, un polyamide, une polycétone, un polyuréthane, une fibre naturelle, une fibre minérale, une fibre cellulosique et un assemblage de ces matériaux, de préférence choisi parmi un polyester, un polyamide, une polycétone, un polyuréthane, une fibre naturelle, une fibre cellulosique et un assemblage de ces matériaux, plus préférentiellement choisi parmi un polyester, une fibre naturelle, une fibre cellulosique et un assemblage de ces matériaux.

11. Panneau selon l'une quelconque des revendications précédentes dans lequel au moins un des tissus comprend un matériau ignifuge, par sa nature ou par un traitement d'ignifugation.

12. Panneau selon l'une quelconque des revendications précédentes dans lequel chaque élément filaire de la structure de liaison est textile.

13. Panneau selon l'une quelconque des revendications 1 à 11 dans lequel chaque élément filaire de la structure de liaison est métallique.

14. Panneau selon l'une quelconque des revendications précédentes dans lequel la longueur au repos moyenne $\overline{h_m}$ des

haubans est supérieure à 8 mm, de manière préférée comprise entre 10 et 2000 mm, préférentiellement comprise entre 10 et 1000 mm, préférentiellement comprise entre 10 et 500 mm, très préférentiellement comprise entre 30 et 100 mm, de manière très préférée comprise entre 40 et 70 mm.

15. Assemblage comprenant au moins un panneau selon l'une quelconque des revendications 1 à 14.


**Patentansprüche**

1. Platte, beinhaltend:

   • ein erstes Gewebe, beinhaltend fadenförmige Elemente (C1), als Kettenelemente bezeichnet, die zueinander im Wesentlichen parallel sind und sich entlang einer sogenannten Kettenrichtung erstrecken, die eine erste Hauptrichtung des ersten Gewebes bildet, fadenförmige Elemente (T1), als Schusselemente bezeichnet, die zueinander im Wesentlichen parallel sind und sich entlang einer sogenannten Schussrichtung erstrecken, die eine zweite Hauptrichtung des ersten Gewebes bildet, die sich von der ersten Hauptrichtung des ersten Gewebes unterscheidet;
   • ein zweites Gewebe, beinhaltend fadenförmige Elemente (C2), als Kettenelemente bezeichnet, die zueinander im Wesentlichen parallel sind und sich entlang einer sogenannten Kettenrichtung erstrecken, die eine erste Hauptrichtung des zweiten Gewebes bildet, zweite fadenförmige Elemente (T2), als Schusselemente bezeichnet, die zueinander im Wesentlichen parallel sind und sich entlang einer sogenannten Schussrichtung erstrecken, die eine zweite Hauptrichtung des zweiten Gewebes bildet, die sich von der ersten Hauptrichtung des zweiten Gewebes unterscheidet;
   • eine Verbindungsstruktur, die n fadenförmige Elemente beinhaltet, die das erste Gewebe mit dem zweiten Gewebe verbinden, wobei jedes fadenförmige Element mindestens einen fadenförmigen Abschnitt, als Abspannung bezeichnet, beinhaltet, der sich zwischen dem ersten und dem zweiten Gewebe erstreckt und das erste Gewebe mit dem zweiten Gewebe verbindet, wobei jede Abspannung i eine Länge im unbeanspruchten Zustand $h_i$ aufweist und sich von einem Befestigungspunkt an dem ersten Gewebe zu einem Befestigungspunkt an dem zweiten Gewebe erstreckt;

   mindestens ein Teil der m Abspannungen der Verbindungsstruktur weist eine Länge im unbeanspruchten Zustand auf, die sich vom Mittelwert der Längen im unbeanspruchten Zustand $\overline{h_m}$ der Abspannungen unterscheidet, wobei m die Gesamtanzahl an Abspannungen der Verbindungsstruktur darstellt, **dadurch gekennzeichnet, dass** die Abweichung E, ausgedrückt in %, zwischen der Länge im unbeanspruchten Zustand der längsten Abspannung der Verbindungsstruktur $h_{max}$ und der Länge im unbeanspruchten Zustand der kürzesten Abspannung der Verbindungsstruktur $h_{min}$, berechnet gemäß $E=100 \times (h_{max}-h_{min})/h_{min}$, derart ist, dass $E > A_r$, wobei $A_r$ die Bruchdehnung, in %, derjenigen Abspannung darstellt, deren Länge im unbeanspruchten Zustand am kleinsten ist, und dass das erste Gewebe entlang mindestens einer von der ersten und der zweiten Hauptrichtung des ersten Gewebes plastisch verformbar ist, sodass der Abstand zwischen den zwei Befestigungspunkten jeder Abspannung i im Wesentlichen gleich ihrer Länge im unbeanspruchten Zustand $h_i$ ist.

2. Platte nach dem vorhergehenden Anspruch, wobei die Höhen $h_i$ der Abspannungen entlang mindestens einer von der ersten und der zweiten Hauptrichtung des ersten Gewebes periodisch verteilt sind.

3. Platte nach einem der vorhergehenden Ansprüche, beinhaltend mindestens g Gruppen $G_j$ von Abspannungen, wobei g größer als 1 und kleiner als m ist und j eine ganze Zahl zwischen 1 und g ist, wobei jede Gruppe $G_j$ **dadurch gekennzeichnet ist, dass** jede Abspannung der Gruppe $G_j$ eine Länge im unbeanspruchten Zustand aufweist, die im Wesentlichen gleich dem Mittelwert der Längen im unbeanspruchten Zustand $\overline{h_j}$ der Abspannungen der Gruppe $G_j$ ist, und, wenn j und k unterschiedliche ganze Zahlen zwischen 1 und g sind, $\overline{h_j} \neq \overline{h_k}$.

4. Platte nach einem der vorhergehenden Ansprüche, beinhaltend ein Füllmaterial zwischen der Innenfläche des ersten Gewebes und der Innenfläche des zweiten Gewebes.

5. Platte nach dem vorhergehenden Anspruch, wobei das Füllmaterial aus Sand, Zement, einem Schaumbeton, Gips, Erde, Ton, Naturfasern, Mineralfasern, Polystyrol, Polyurethan, Kork, Erdaushub, zerkleinerten Gebäude- oder Infrastrukturrückständen ausgewählt ist.

6. Platte nach Anspruch 4, wobei das Füllmaterial ein expandiertes Material, bevorzugt ein expandierter Schaum, vorzugsweise ein expandierter Polyurethanschaum ist.

7. Platte nach einem der vorhergehenden Ansprüche, wobei das zweite Gewebe entlang mindestens einer von der ersten und der zweiten Hauptrichtung des zweiten Gewebes verformbar ist.

8. Platte nach dem vorhergehenden Anspruch, wobei sich das zweite Gewebe plastisch verformt.

9. Platte nach einem der vorhergehenden Ansprüche, wobei mindestens ein Gewebe, das aus dem ersten Gewebe und dem zweiten Gewebe ausgewählt ist, mindestens einen verformbaren Bereich beinhaltet, wobei der verformbare Bereich mindestens ein durch Zug verformbares fadenförmiges Element ED beinhaltet, wobei es für jedes durch Zug verformbare fadenförmige Element ED eine Dehnung $A_{ED} < AR_{ED}$ derart gibt, dass $M1_{ED}/M2_{ED}<1$, wobei $M1_{ED}$ den Modul des verformbaren fadenförmigen Elements ED für jede Dehnung kleiner als oder gleich $K1 \times A_{ED}$ % darstellt, $M2_{ED}$ den Modul des verformbaren fadenförmigen Elements ED für jede Dehnung größer als oder gleich $K2 \times A_{ED}$ % darstellt, $AR_{ED}$ die Bruchdehnung des Elements ED in % darstellt, wobei K1 von 0,8 bis 0,95 reicht und K2 von 1,05 bis 1,2 reicht, wobei die Module $M1_{ED}$, $M2_{ED}$ und die Bruchdehnung $AR_{ED}$ gemäß der Norm ASTM D885-03 gemessen werden.

10. Platte nach einem der vorhergehenden Ansprüche, wobei das erste und das zweite Gewebe unabhängig voneinander ein Material beinhalten, das aus einem Polyester, einem Polyamid, einem Polyketon, einem Polyurethan, einer Naturfaser, einer Mineralfaser, einer Zellulosefaser und einem Verband aus diesen Materialien ausgewählt ist, bevorzugt aus einem Polyester, einem Polyamid, einem Polyketon, einem Polyurethan, einer Naturfaser, einer Zellulosefaser und einem Verband aus diesen Materialien ausgewählt ist, noch bevorzugter aus einem Polyester, einer Naturfaser, einer Zellulosefaser und einem Verband aus diesen Materialien ausgewählt ist.

11. Platte nach einem der vorhergehenden Ansprüche, wobei mindestens eines der Gewebe ein von Natur aus oder durch eine Flammschutzbehandlung feuerfestes Material beinhaltet.

12. Platte nach einem der vorhergehenden Ansprüche, wobei jedes fadenförmige Element der Verbindungsstruktur textil ist.

13. Platte nach einem der Ansprüche 1 bis 11, wobei jedes fadenförmige Element der Verbindungsstruktur metallisch ist.

14. Platte nach einem der vorhergehenden Ansprüche, wobei die mittlere Länge im unbeanspruchten Zustand $\overline{h_m}$ der Abspannungen größer als 8 mm ist, vorzugsweise zwischen 10 und 2000 mm liegt, bevorzugt zwischen 10 und 1000 mm liegt, bevorzugt zwischen 10 und 500 mm liegt, sehr bevorzugt zwischen 30 und 100 mm liegt, sehr vorzugsweise zwischen 40 und 70 mm liegt.

15. Anordnung, beinhaltend mindestens eine Platte nach einem der Ansprüche 1 bis 14.

**Claims**

1. Panel comprising:

   • a first woven fabric comprising filamentary elements (C1), referred to as warp elements, which are substantially parallel to one another and extend in a direction referred to as the warp direction, which constitutes a first main direction of the first woven fabric, filamentary elements (T1), referred to as weft elements, which are substantially parallel to one another and extend in a direction referred to as the weft direction, which constitutes a second main direction of the first woven fabric different from the first main direction of the first woven fabric;
   • a second woven fabric comprising filamentary elements (C2), referred to as warp elements, which are substantially parallel to one another and extend in a direction referred to as the warp direction, which constitutes a first main direction of the second woven fabric, second filamentary elements (T2), referred to as weft elements, which are substantially parallel to one another and extend in a direction referred to as the weft direction, which constitutes a second main direction of the second woven fabric different from the first main direction of the second woven fabric;
   • a linking structure comprising n filamentary elements linking the first woven fabric to the second woven fabric, each filamentary element comprising at least one filamentary portion, referred to as a stay, extending between the first and second woven fabrics and linking the first woven fabric to the second woven fabric, each stay i having an

at-rest length $h_i$ and extending from a point of attachment to the first woven fabric to a point of attachment to the second woven fabric;

at least some of the m stays of the linking structure have an at-rest length that is different from the mean $\overline{h_m}$ of the at-rest lengths of the stays, m representing the total number of stays of the linking structure, **characterized in that** the difference E, expressed as a %, between the at-rest length $h_{max}$ of the longest stay of the linking structure and the at-rest length $h_{min}$ of the shortest stay of the linking structure, and calculated as $E = 100 \times (h_{max} - h_{min})/h_{min}$, is such that $E > A_r$, where $A_r$ represents, as a %, the elongation at break of the stay of the shortest at-rest length, and **in that** the first woven fabric is plastically deformable in at least one of the first and second main directions of the first woven fabric so that the distance between the two points of attachment of each stay i is substantially equal to its at-rest length $h_i$.

2. Panel according to the preceding claim, wherein the heights $h_i$ of the stays are distributed periodically in at least one of the first and second main directions of the first woven fabric.

3. Panel according to either one of the preceding claims, comprising at least g groups $G_j$ of stays, where g is greater than 1 and less than m, and j is an integer comprised between 1 and g, each group $G_j$ being **characterized in that** each stage of said group $G_j$ has an at-rest length substantially equal to the mean of the at-rest lengths $\overline{h_J}$ of the stays of said group $G_j$ and, for j and k being different integers comprised between 1 and g, $\overline{h_J} \neq \overline{h_k}$.

4. Panel according to any one of the preceding claims, comprising, between the internal face of the first woven fabric and the internal face of the second woven fabric, a filling material.

5. Panel according to the preceding claim, wherein the filling material is selected from sand, cement, a cement-based foam, plaster, soil, clay, natural fibres, inorganic fibres, polystyrene, polyurethane, cork, spoil and crushed building or infrastructure rubble.

6. Panel according to Claim 4, wherein the filling material is an expanded material, preferably an expanded foam, preferably an expanded polyurethane foam.

7. Panel according to any one of the preceding claims, wherein the second woven fabric is deformable in at least one of the first and second main directions of the second woven fabric.

8. Panel according to the preceding claim, wherein the second woven fabric deforms plastically.

9. Panel according to any one of the preceding claims, wherein at least one woven fabric selected from the first woven fabric and the second woven fabric comprises at least one deformable zone, the deformable zone comprising at least one filamentary element ED deformable under traction, wherein, for any traction-deformable filamentary element ED, there is an elongation $A_{ED} < AR_{ED}$ that is such that $M1_{ED}/M2_{ED} < 1$, where $M1_{ED}$ represents the modulus of the deformable filamentary element ED for any elongation less than or equal to $K1 \times A_{ED}\%$, $M2_{ED}$ represents the modulus of the deformable filamentary element ED for any elongation greater than or equal to $K2 \times A_{ED}\%$, $AR_{ED}$ representing the elongation at break of the element ED, as a %, with K1 ranging from 0.8 to 0.95 and K2 ranging from 1.05 to 1.2, the modulus values $M1_{ED}$, $M2_{ED}$ and the elongation at break $AR_{ED}$ being measured in accordance with the standard ASTM D885-03.

10. Panel according to any one of the preceding claims, wherein the first and second woven fabrics comprise, independently of one another, a material selected from a polyester, a polyamide, a polyketone, a polyurethane, a natural fibre, an inorganic fibre, a cellulose fibre and a collection of these materials, preferably selected from a polyester, a polyamide, a polyketone, a polyurethane, a natural fibre, a cellulose fibre and a collection of these materials, and more preferentially selected from a polyester, a natural fibre, a cellulose fibre and a collection of these materials.

11. Panel according to any one of the preceding claims, wherein at least one of the woven fabrics comprises a material that is fire-retardant either through its nature or by having a fire-retardant treatment.

12. Panel according to any one of the preceding claims, wherein each filamentary element of the linking structure is a textile element.

13. Panel according to any one of Claims 1 to 11, wherein each filamentary element of the linking structure is a metallic element.

14. Panel according to any one of the preceding claims, wherein the mean at-rest length $\overline{h_m}$ of the stays is greater than 8 mm, preferably comprised between 10 and 2000 mm, preferentially comprised between 10 and 1000 mm, preferentially comprised between 10 and 500 mm, highly preferentially comprised between 30 and 100 mm, and as a very strong preference, comprised between 40 and 70 mm.

15. Assembly comprising at least one panel according to any one of Claims 1 to 14.

[Fig.1]

[Fig.2]

[Fig.3]

[Fig 4]

[Fig 5]

**RÉFÉRENCES CITÉES DANS LA DESCRIPTION**

**Documents brevets cités dans la description**

- US 20170044766 A
- WO 2019197319 A
- US 20100233417 A
- WO 2015053842 A
- WO 2015187826 A
- EP 2408957 B1
- WO 2018130782 A
- WO 2018130783 A